# EUROPÄISCHE PATENTSCHRIFT

(11) **EP 2 203 901 B1**
(45) Veröffentlichungstag und Bekanntmachung des Hinweises auf die Patenterteilung: **15.01.2014**
(21) Anmeldenummer: 08842813.1
(22) Anmeldetag: 08.10.2008
(51) Int. Cl.: G07C 9/00

(54) **DOKUMENT MIT EINER ANZEIGEVORRICHTUNG**
DOCUMENT HAVING A DISPLAY DEVICE
DOCUMENT AVEC UN DISPOSITIF D'AFFICHAGE

(30) Priorität: 19.10.2007 DE 102007050480
(43) Veröffentlichungstag der Anmeldung: 07.07.2010
(73) Patentinhaber: Bundesdruckerei GmbH, 10958 Berlin (DE)
(72) Erfinder: DIETRICH, Frank, 12437 Berlin (DE); SCHULZ, Hendrik, 10249 Berlin (DE); FISCHER, Jörg, 13053 Berlin (DE); PAESCHKE, Manfred, 16348 Wandlitz (DE); PFLUGHOEFFT, Malte, 13347 Berlin (DE); FRITZE, Frank, 12487 Berlin (DE)
(74) Vertreter: Richardt Patentanwälte GbR
(86) Internationale Anmeldenummer: PCT/EP2008/063490
(87) Internationale Veröffentlichungsnummer: WO 2009/053249

(56) Entgegenhaltungen:
- WO-A-2005/109887
- WO-A-2008/003595
- WO-A-2008/083921
- DE-A1- 19 633 945
- DE-A1-102005 025 806
- DE-A1-102005 052 070
- DE-U1-202007 000 708
- US-A1- 2005 211 767
- BUNDESAMT FÜR SICHERHEIT IN DER INFORMATIONSTECHNIK: "Digitale Sicherheitsmerkmale im elektronischen Reisepass"[Online] 1. Juni 2005 (2005-06-01), Seiten 1-4, XP002511629 Gefunden im Internet: URL:http://www.bsi.de/fachthem/elekausweis e/Sicherheitsmerkmale.pdf> [gefunden am 2009-01-22]
- ICAO: 'Machine Readable Travel Documents', [Online] 01 Januar 2006, XP007921660 ISBN: 92-9194-757-1 MACHINE READABLE TRAVEL DOCUMENTS, ICAO, PAGE(S) 1 - 131 Gefunden im Internet: <URL:http://www.icao.int/publications/Docum ents/9303_p1_v2_cons_en.pdf>

## Beschreibung

Die Erfindung betrifft ein Dokument, insbesondere ein Wert- oder Sicherheitsdokument, wie z. B. ein ID-Dokument, mit einer Anzeigevorrichtung.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der Patentanmeldung DE 10 2006 031 422 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Der Erfindung liegt demgegenüber die Aufgabe zugrunde, ein verbessertes Dokument zu schaffen.

Die der Erfindung zugrundeliegende Aufgabe wird mit den Merkmalen des unabhängigen Patentanspruchs gelöst. Ausführungsformen der Erfindung sind in den abhängigen Patentansprüchen angegeben.

Nach den Ausführungsformen der Erfindung wird ein Dokument mit einem elektronischen Speicher zur Speicherung von Daten geschaffen. Bei den Daten kann es sich um beliebige Daten handeln, die zur Wiedergabe auf einer Anzeigevorrichtung geeignet sind, wie z. B. digitalisierte Bilddaten, textuelle Informationen oder andere Daten. Diese Daten können durch eine Anzeigevorrichtung des Dokuments wiedergegeben werden, so dass sie durch einen Benutzer visuell und kognitiv erfasst werden können.

Das Dokument hat eine Schnittstelle zum Empfang einer Leseanforderung von einem Lesegerät. Die Schnittstelle kann kontaktlos, kontaktbehaftet oder als so genannte Dual-Mode-Schnittstelle ausgebildet sein. In einer Ausführung kann die Schnittstelle als RF-Schnittstelle ausgebildet sein, so dass die Kommunikation zwischen dem Dokument und dem Lesegerät nach einem RFID-Verfahren erfolgen kann.

Das Dokument hat Mittel zur Ausführung eines kryptografischen Protokolls zur Überprüfung einer Berechtigung des Lesegeräts für die Leseanforderung. Beispielsweise dient das kryptografische Protokoll zur Authentifizierung des Lesegeräts gegenüber dem Dokument, insbesondere nach einem so genannten Challenge-Response-Verfahren.

Nach einer erfolgreichen Durchführung des kryptografischen Protokolls wird ein internes Freigabe-Signal in dem Dokument erzeugt. Die Anzeigevorrichtung wird daraufhin zur Wiedergabe der mit der Leseanforderung angeforderten Daten angesteuert. Eine Ausgabe der Daten über die Schnittstellen erfolgt aber nicht.

Dies ist besonders vorteilhaft, da die Daten prinzipiell nicht aus dem Dokument ausgelesen werden können. Auf eine Leseanforderung des Lesegeräts werden die Daten nämlich nicht über die Schnittstellen des Dokuments an das Lesegerät gesendet, sondern es erfolgt lediglich eine Wiedergabe auf der Anzeigevorrichtung des Dokuments, die mit Hilfe der Daten angesteuert wird.

Die in dem elektronischen Speicher des Dokuments gespeicherten Daten werden also nicht unmittelbar über die Schnittstelle ausgegeben, sondern dienen lediglich zur Ansteuerung der Anzeigevorrichtung, um z. B. eine Bildwiedergabe zu erzeugen, die von einem Benutzer visuell und kognitiv erfassbar sein kann. Hierdurch wird vermieden, dass die Daten in dem Lesegerät gespeichert oder z. B. über ein Netzwerk weitergeleitet werden können.

Der Träger des Dokuments bleibt also im alleinigen Besitz seiner Daten, die in dem elektronischen Speicher des Dokuments gespeichert sind. Da die Daten allein für die Generierung einer visuellen Ausgabe vorgesehen sind, kann der Träger des Dokuments ferner bequem und intuitiv überprüfen, welche Daten elektronisch in seinem Dokument gespeichert sind und ob diese Daten zutreffend und vollständig sind.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine.

Insbesondere wenn es sich bei dem Dokument um ein ID-Dokument, beispielsweise einen elektronischen Reisepass oder einen elektronischen Personalausweis handelt, sind die oben genannten erfindungsgemäßen Vorteile wesentlich für eine Akzeptanz eines solchen Dokuments beim Bürger, insbesondere unter dem Gesichtspunkt des Datenschutzes.

Unter einem "Lesegerät" wird hier jedes Gerät verstanden, welches zumindest dazu geeignet ist, die Widergabe der Daten auf der Anzeigevorrichtung des Dokuments zu initiieren.

Einerseits ist der Bürger dagegen geschützt, dass ein Dritter unbefugt die Daten auf der Anzeigevorrichtung des Dokuments wiedergeben lassen kann, da dieser Vorgang nur mit Hilfe eines Lesegeräts initiiert werden kann, welches sich gegenüber dem Dokument mit Hilfe eines kryptografischen Protokolls authentisieren muss. Beispielsweise sind nur Lesegeräte von Behörden, staatlichen Stellen oder anderen speziell befugten Institutionen zur Initiierung der Wiedergabe der Daten auf der Anzeigevorrichtung zugelassen. Wenn also der Bürger sein Dokument verliert, so kann ein Finder des Dokuments nicht die Wiedergabe der Daten über die Anzeigevorrichtung initiieren, da er nicht im Besitz eines dafür erforderlichen Lesegeräts ist.

Andererseits ist der Bürger auch gegenüber für Leseanforderungen befugte Institutionen, die ein hierfür zugelassenes Lesegerät haben, gegen einen Missbrauch seiner Daten geschützt, da auch mit Hilfe eines solchen Lesegeräts kein unmittelbarer Zugriff auf die Daten möglich ist, sondern lediglich eine Initiierung von deren Wiedergabe auf der Anzeigevorrichtung. Dadurch kann vermieden werden, dass etwa unbemerkt eine Kopie der Daten des Bürgers auf dem Lesegerät zurückbehalten wird oder dass seine Daten gar über ein Netzwerk weitergeleitet und in einer zentralen Datenbank gespeichert werden, um beispielsweise seitens staatlicher Überwachungsorgane ein Bewegungsprofil zu erstellen.

Nach einer Ausführungsform der Erfindung hat das Dokument einen maschinenlesbaren Aufdruck. Der Aufdruck kann beispielsweise mit einem optischen Sensor des Lesegeräts erfasst werden. Im Falle eines Ausweisdokuments handelt es sich bei dem Aufdruck beispielsweise um die so genannte "Machine-Readable-Zone" (MRZ), die auch als ICAO-Zeile bezeichnet wird.

Die korrekte Erfassung dieses Aufdrucks durch das Lesegerät kann Voraussetzung für die erfolgreiche Durchführung des kryptografischen Protokolls sein. Beispielsweise kann der Aufdruck einen kryptografischen Schlüssel für die Durchführung des kryptografischen Protokolls beinhalten oder es kann aus dem Aufdruck ein solcher kryptografischer Schlüssel durch das Lesegerät ableitbar sein. Für die Ableitung des kryptografischen Schlüssels aus von dem Aufdruck erfassten Daten kann die Verwendung eines so genannten Master-Keys erforderlich sein, der beispielsweise nicht in dem Lesegerät selbst sondern in einer Chipkarte, mit der das Lesegerät kommunizieren kann, gespeichert ist.

Insbesondere kann mit Hilfe des Aufdrucks eine so genannte Basic-Access-Control (BAC) realisiert werden.

Für eine Authentisierung des Lesegeräts gegenüber dem Dokument kann auch ein Authentisierungsverfahren basierend auf asymmetrischen Schlüsselpaaren verwendet werden. Beispielsweise ist sowohl dem Lesegerät als auch dem Dokument jeweils ein solches asymmetrisches Schlüsselpaar bestehend aus einem privaten und einem öffentlichen Schlüssel zugeordnet. Mit Hilfe dieser Schlüsselpaare kann eine einseitige oder eine gegenseitige Authentisierung des Lesegeräts gegenüber dem Dokument und des Dokuments gegenüber dem Lesegerät erfolgen. Hierzu kann ein so genanntes Challenge-Response-Verfahren verwendet werden.

Beispielsweise kann zur Authentisierung des Lesegeräts gegenüber dem Dokument mit Hilfe eines Challenge-Response-Verfahrens wie folgt vorgegangen werden:

Aufgrund der Leseanforderung, welche das Dokument von dem Lesegerät empfängt, erzeugt das Dokument eine Zufallszahl, die mit Hilfe des öffentlichen Schlüssels des Lesegeräts verschlüsselt wird. Das aus dieser Verschlüsselung resultierende Chiffrat sendet das Dokument an das Lesegerät zurück. Das Lesegerät unternimmt daraufhin den Versuch einer Entschlüsselung dieses Chiffrats mit Hilfe seines geheimen Schlüssels.

Wenn der geheime Schlüssel zutreffend ist, das heißt zu dem öffentlichen Schlüssel, der zur Erzeugung des Chiffrats verwendet worden ist, passt, erhält das Lesegerät die korrekte Zufallszahl. Das Lesegerät sendet das Resultat der Entschlüsselung zurück an das Dokument. Das Dokument vergleicht das von dem Lesegerät empfangene Resultat der Entschlüsselung mit der ursprünglich erzeugten Zufallszahl. Nur wenn beides übereinstimmt, gilt das Lesegerät gegenüber dem Dokument als authentifiziert, so dass das Freigabesignal für die Wiedergabe der Daten auf der Anzeigevorrichtung resultiert.

Nach einer Ausführungsform der Erfindung können von dem Dokument an das Lesegerät Daten übertragen werden, und zwar durch Ausgabe eines entsprechenden optischen Datensignals über die Anzeigevorrichtung. Alternativ oder zusätzlich können die Daten auch kontaktlos oder kontaktbehaftet über die Schnittstelle des Dokuments an das Lesegerät übertragen werden. Bei diesen Daten kann es sich beispielsweise um einen symmetrischen und/oder einen asymetrischen Schlüssel, inbesondere zur Durchführung eines EAC Verfahrens, handeln. Die Daten können in einem elektronischen Speicher des Dokuments gespeichert sein.

Nach einer Ausführungsform der Erfindung sind die Daten in dem elektronischen Speicher des Dokuments in einer komprimierten Form gespeichert. Beispielsweise können die Daten mit Hilfe an sich bekannter Bilddaten-Kompressionsverfahren komprimiert sein. Insbesondere können die Daten in Form einer Vektorgrafik vorliegen oder mit Hilfe von JPEG-, MPEG-, JPEG2000-, Wavelet- oder H.264- Verfahren komprimiert sein. Es kann jedoch auch ein geheimes, nicht standardisiertes Bilddaten-Kompressionsverfahren oder ein Verschlüsselungsverfahren eingesetzt werden, um die Daten zusätzlich zu schützen.

Die Dekompression bzw. Entschlüsselung der Daten erfolgt nur dann, wenn die Authentifizierung des Lesegeräts gegenüber dem Dokument erfolgreich war. Nach der Dekompression können die Bilddaten zur Ansteuerung der Anzeigevorrichtung verwendet werden, um die Daten auf der Anzeigevorrichtung wiederzugeben.

Nach einer Ausführungsform der Erfindung beinhalten die in dem elektronischen Speicher des Dokuments gespeicherten Daten eine Bildsequenz. Unter einer "Bildsequenz" werden hier Daten verstanden, die als eine Sequenz von Bildern auf der Anzeigevorrichtung wiedergegeben werden können. Insbesondere kann die Bildsequenz zumindest ein erstes Bild und ein zweites Bild eines Inhabers des Dokuments beinhalten, wobei das erste Bild und das zweite Bild den Inhaber in unterschiedlichen ersten und zweiten Ansichten zeigen.

Beispielsweise handelt es sich bei den ersten und zweiten Bildern um Gesichtsbilder des Inhabers aus unterschiedlichen Ansichten, insbesondere ein Gesichtsbild in frontaler Ansicht und ein Gesichtsbild in seitlicher Ansicht.

Die Wiedergabe einer Bildsequenz mit Bildern des Inhabers des Wert- oder Sicherheitsdokuments aus unterschiedlichen Ansichten hat gegenüber einer statischen Anzeige eines einzigen zweidimensionalen Bildes den Vorteil, dass die Verifikation des Wert- oder Sicherheitsdokuments dadurch sicherer wird. Es hat sich nämlich herausgestellt, dass oftmals das üblicherweise in einem Ausweisdokument beinhaltete frontale Gesichtsbild für eine sichere Verifikation nicht ausreichend ist. Zur Erhöhung der Sicherheit bei der visuellen Verifikation, zum Beispiel durch einen Grenzbeamten oder Polizisten, werden erfindungsgemäß daher zumindest zwei Bilder des Inhabers in einer Bildsequenz nacheinander auf der Anzeigevorrichtung wiedergegeben. Dadurch lassen sich insbesondere geringere False Rejection Rates (FRR) und False Acceptance Rates (FAR) erreichen.

Nach einer Ausführungsform der Erfindung beinhalten die in dem elektronischen Speicher des Dokuments gespeicherten Daten textuelle Angaben, wie z. B. persönliche Angaben zu dem Inhaber des Dokuments, insbesondere Angaben zu dessen Namen, Wohnort, Alter, Größe und dergleichen. Diese textuellen Angaben können Teil der Bildsequenz sein. Ferner können solche textuellen Angaben in verschieden Sprachversionen gespeichert sein.

Nach einer Ausführungsform der Erfindung beinhaltet die Leseanforderung des Lesegeräts eine Spezifizierung der wiederzugebenden Daten. Aufgrund der Leseanforderung sollen also nicht sämtliche der in dem elektronischen Speicher des Dokuments gespeicherten Daten wiedergegeben werden, sondern nur eine Auswahl davon.

Beispielsweise beinhaltet die Leseanforderung eine Spezifizierung der gewünschten Sprache für die Wiedergabe der in den Daten beinhalteten textuellen Angaben. Aufgrund dieser Spezifizierung wird also auf die entsprechende Sprachversion der textuellen Angaben zugegriffen, um nur diese Sprachversion auf der Anzeigevorrichtung wiederzugeben. Dies ist besonders vorteilhaft um z.B. die Grenzkontrolle zu beschleunigen, da nur die Daten in der gewünschten Sprachversion für den Grenzbeamten wiedergegeben werden.

Nach einer Ausführungsform der Erfindung hat das Dokument ein Manipulandum zur Betätigung durch den Träger des Dokuments. Bei dem Manipulandum kann es sich um ein Bedienelement handeln, wie z. B. ein Einknopf-Bedienelement. Die Betätigung des Manipulandums ist eine weitere Voraussetzung für die Wiedergabe der Daten auf der Anzeigevorrichtung. Zusätzlich zu der Authentifizierung des Lesegeräts gegenüber dem Dokument ist es also erforderlich, dass das Manipulandum betätigt wird, so dass eine Wiedergabe der Daten erfolgt.

Beispielsweise muss das Manipulandum während der gesamten Zeitdauer der Wiedergabe der Daten betätigt werden. Alternativ wird die Wiedergabe der Daten nach Betätigung des Manipulandums für einen vorgegebenen kurzen Zeitraum, der z. B. einige Sekunden betragen kann, ermöglicht. Hierdurch wird ein weiterer Schutzmechanismus zum Schutz der Daten des Trägers des Dokuments geschaffen.

Nach einer Ausführungsform der Erfindung dient das Manipulandum zur Navigation entlang einer in den Daten beinhalteten Bildsequenz. Durch Betätigung des Manipulandums kann der Benutzer also das gewünschte Bild für die Wiedergabe auf der Anzeigevorrichtung auswählen. Beispielsweise kann das Manipulandum hierzu eine "Vor-" und "Zurück" Navigationsfunktion zur Navigation entlang der Bildsequenz beinhalten.

Nach einer Ausführungsform der Erfindung hat das Dokument einen Sensor zur Erfassung eines biometrischen Merkmals, wie z. B. eines Fingerabdrucks oder zur Stimmerkennung des Trägers des Dokuments. Bei dem Sensor kann es sich also um einen Fingerabdruck-Sensor bzw. ein Mikrophon handeln. Das Dokument hat ferner Mittel zur Biometrie-Prüfung, das heißt zur Überprüfung eines erfassten biometrischen Merkmals auf hinreichende Übereinstimmung mit einem in dem elektronischen Speicher des Dokuments gespeicherten biometrischen Referenzmerkmal.

Zur Wiedergabe der Daten auf der Anzeigevorrichtung ist bei dieser Ausführungsform die Erfüllung der weiteren Voraussetzung erforderlich, wonach ein mit Hilfe des Sensors erfasstes biometrisches Merkmal mit dem biometrischen Referenzmerkmal hinreichend übereinstimmen muss. Hierdurch ist ein weiterer Schutz gegen eine unbefugte Wiedergabe der Daten gegeben. Beispielsweise werden die Fingerabdruckdaten des Trägers des Dokuments als dessen biometrische Referenzmerkmale in dem elektronischen Speicher des Dokuments gespeichert, so dass eine Wiedergabe der Daten nur dann erfolgen kann, wenn der Träger seine Fingerabdruckdaten mit Hilfe des Sensors des Dokuments erfassen lässt.

In einem weiteren jedoch nicht beanspruchten Aspekt betrifft die Anmeldung ein Lesegerät für ein erfindungsgemäßes Dokument mit einer Schnittstelle zum Senden einer Leseanforderung an das Dokument und mit Mitteln zur Ausführung eines kryptografischen Protokolls zur Überprüfung einer Berechtigung des Lesegeräts für die Leseanforderung.

In einem weiteren jedoch nicht beanspruchten Aspekt betrifft die Anmeldung ein Verfahren zum Lesen von in einem elektronischen Speicher eines Dokuments gespeicherten Daten mit folgenden Schritten: Übermittlung einer Leseanforderung für eine Wiedergabe der Daten von dem Lesegerät an eine Kommunikationsschnittstelle des Dokuments; Durchführung eines kryptografischen Protokolls durch einen elektronischen Schaltkreis des Dokuments und das Lesegerät über die Kommunikationsverbindung; Lesen der Daten aus dem elektronischen Speicher des Dokuments durch den elektronischen Schaltkreis und Ansteuerung der Anzeigevorrichtung zur Wiedergabe der Daten durch den elektronischen Schaltkreis, wenn die Durchführung des kryptografischen Protokolls erfolgreich war.

In einem weiteren jedoch nicht beanspruchten Aspekt betrifft die Anmeldung ein Computerprogrammprodukt mit ausführbaren Prognramminstruktionen zur Durchführung eines solchen Verfahrens.

Im Weiteren werden Ausführungsformen mit Bezugnahme auf die Zeichnungen näher erläutert. Es zeigen:
- Fig. 1: ein Blockdiagramm einer ersten Ausführungsform eines erfindungsgemäßen Dokuments,
- Fig. 2: ein Flussdiagramm einer Ausführungsform eines Verfahrens,
- Fig. 3: ein Blockdiagramm einer weiteren Ausführungsform eines erfindungsgemäßen Dokuments mit einem maschinenlesbaren Aufdruck,
- Fig. 4: ein Blockdiagramm einer weiteren Ausführungsform eines erfindungsgemäßen Dokuments mit einem Manipulandum,
- Fig. 5: ein Blockdiagramm einer weiteren Ausführungsform eines erfindungsgemäßen Dokuments mit einem Sensor zur Erfassung biometrischer Daten.

Elemente der nachfolgenden Ausführungsformen, die einander entsprechen, sind mit denselben Bezugszeichen gekennzeichnet.

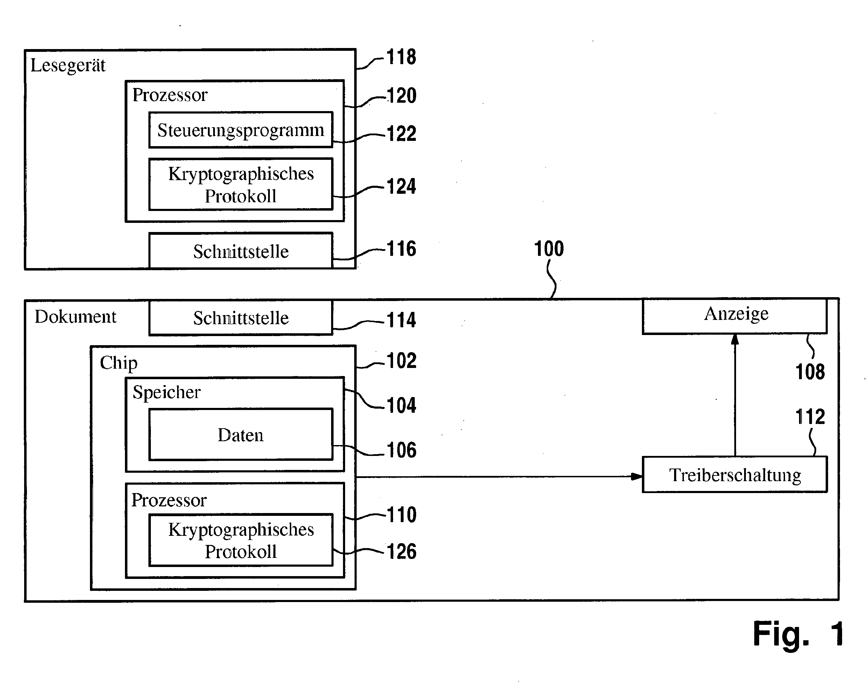

Die Fig. 1 zeigt ein Dokument 100. Bei dem Dokument 100 kann es sich beispielsweise um ein ID-Dokument, insbesondere um ein Ausweisdokument, handeln. Das Dokument 100 hat eine integrierte elektronische Schaltung, z.B. einen Chip 102 mit einem elektronischen Speicher 104 zur Speicherung von Daten 106.

Die Daten 106 dienen zur Wiedergabe auf einer Anzeige 108 des Dokuments 100. Zur Erzeugung einer Bildwiedergabe auf der Anzeige 108 greift ein Prozessor 110 des Chips 102 auf die Daten 106 zu und steuert mit Hilfe der Daten 106 eine Treiberschaltung 112 an, so dass die Daten 106 auf der Anzeige 108 wiedergegeben werden. Die Treiberschaltung 112 kann einen integralen Bestandteil des Chips 102 oder der Anzeige 108 bilden. Alternativ kann die Treiberschaltung 112 als separate Komponente ausgebildet sein.

Bei der in das Dokument integrierten Anzeige 108 kann es sich z.B. um ein Aktivoder Passiv-Matrix-Display oder eine Segment-Anzeige handeln. Insbesondere kann es sich bei der Anzeige 108 um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Das Dokument 100 hat eine Schnittstelle 114 zur Kommunikation mit einer entsprechenden Schnittstelle 116 eines Lesegeräts 118. Ein Prozessor 120 des Lesegeräts 118 dient zur Ausführung von Programminstruktionen 122, die ein Steuerungsprogramm implementieren, sowie zur Ausführung von Programminstruktionen 124, die das Lesegerät 118 betreffende Schritte eines kryptografischen Protokolls implementieren. Die entsprechenden, das Dokument 100 betreffenden Schritte dieses kryptografischen Protokolls werden durch die Programminstruktionen 126 implementiert, die der Prozessor 110 des Dokuments 100 ausführen kann.

Die Schnittstellen 114, 116 können kontaktbehaftet, kontaktlos oder als so genanntes Dual-Mode-Interface ausgebildet sein. Die Schnittstelle kann dabei auf einer elektrischen, kapazitiven, induktiven, magnetischen, optischen oder einer anderen physikalischen Kopplungsmethode beruhen.

Insbesondere können die Schnittstellen 114, 116 zur Kommunikation nach einem RFID-Verfahren ausgebildet sein. In dem letzteren Fall kann der Chip 102 als so genannter RFID-Chip ausgebildet sein. Die Schnittstelle 114 kann aus ein oder mehreren Antennenwindungen, die im Randbereich des Dokuments 100 verlaufen, für eine RF-Kommunikation mit der Schnittstelle 116 des Lesegeräts 118 ausgebildet sein.

Die Daten 106 können digitale Bilddaten, wie z. B. Gesichtsbilder aus verschiedenen Ansichten, textuelle Angaben oder andere Daten beinhalten, die den Träger des Dokuments 100 betreffen. Diese Daten 106 sind in einem geschützten Bereich des elektronischen Speichers 104 gespeichert, so dass sie grundsätzlich nicht über die Schnittstelle 114 des Dokuments 100 auslesbar sind. Die Daten 106 dienen also ausschließlich dazu, eine Bildwiedergabe auf der Anzeige 108 zu generieren.

Zur Initiierung einer solchen Bildwiedergabe durch das Lesegerät 118 sind folgende Schritte erforderlich: Das Steuerungsprogramm 122 des Lesegeräts 118 veranlasst, dass eine Leseanforderung von der Schnittstelle 116 an die Schnittstelle 114 des Dokuments 100 gesendet wird. Die Berechtigung des Lesegeräts für die Leseanforderung wird dann durch Durchführung des kryptografischen Protokolls überprüft.

Beispielsweise wird hierzu ein kryptografisches Protokoll basierend auf einem asymmetrischen Schlüsselpaar verwendet. Dem Lesegerät 118 ist ein solches asymmetrisches Schlüsselpaar bestehend aus einem öffentlichen und einem privaten Schlüssel zugeordnet. Dieses Schlüsselpaar legt die Identität des Lesegeräts 118 fest.

Zur Prüfung der Authentizität des Lesegeräts 118 wird durch Ausführung der Programminstruktionen 126 seitens des Dokuments 100 eine Zufallszahl generiert, die mit dem öffentlichen Schlüssel des Lesegeräts 118 verschlüsselt wird. Das daraus resultierende Chiffrat wird von der Schnittstelle 114 an die Schnittstelle 116 gesendet.

Durch Ausführung der Programminstruktionen 124 wird seitens des Lesegeräts 118 der Versuch unternommen, das Chiffrat mit Hilfe des privaten Schlüssels des Lesegeräts 118 zu entschlüsseln. Das Resultat dieser Entschlüsselung wird von der Schnittstelle 116 des Lesegeräts 118 an das Dokument 100 zurückgesendet.

Durch Ausführung der Programminstruktionen 126 wird dann seitens des Dokuments 100 verglichen, ob das von dem Lesegerät 118 empfangene Resultat der Entschlüsselung mit der ursprünglich erzeugten Zufallszahl übereinstimmt. Nur wenn dies der Fall ist, gilt das Lesegerät 118 als authentisiert und für die Leseanforderung berechtigt.

Dem Dokument 100 kann ebenfalls ein asymmetrisches Schlüsselpaar zugeordnet sein, um das Dokument 100 gegenüber dem Lesegerät 118 zu authentifizieren. Alternativ oder zusätzlich kann auch ein kryptografisches Protokoll basierend auf einem symmetrischen Schlüssel für eine einseitige Authentifizierung des Lesegeräts 118 oder eine gegenseitige Authentifizierung des Dokuments 100 und des Lesegeräts 118 eingesetzt werden.

Nachdem das kryptografische Protokoll erfolgreich durchgeführt worden ist, geben die Programminstruktionen 126 ein internes Freigabesignal ab, woraufhin der Prozessor 110 des Dokuments 100 auf die Daten 106 zugreift, um mit Hilfe der Daten 106 die Treiberschaltung 112 anzusteuern, so dass eine Bildwiedergabe auf der Anzeige 108 resultiert.

Hierdurch ist ein Höchstmaß an Datenschutz gewährleistet: Einerseits kann ein unbefugter Dritter, der in Besitz des Dokuments 100 gelangt, eine Wiedergabe der Daten 106 des Dokuments 100 nicht initiieren, da er über ein hierzu berechtigtes Lesegerät 118 nicht verfügt. Andererseits kann eine z. B. staatliche Stelle, die über ein autorisiertes Lesegerät 118 verfügt, die Daten 106 nicht aus dem Dokument 100 auslesen, speichern, weiterleiten oder weiterverarbeiten, da selbst nach der Berechtigungsprüfung des Lesegeräts 118 mit Hilfe des kryptografischen Protokoll lediglich eine Wiedergabe der Daten auf der Anzeige 108 erfolgt, die Daten 106 selbst aber nicht über die Schnittstelle 114 ausgegeben werden.

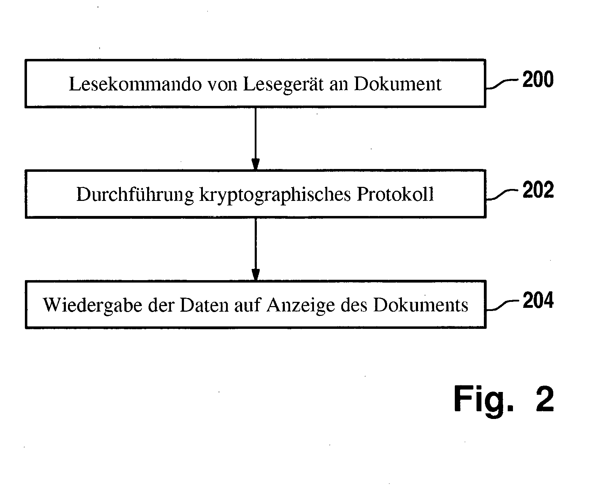

Die Fig. 2 zeigt ein entsprechendes Flussdiagramm. In dem Schritt 200 sendet das Lesegerät ein Lesekommando an das Dokument, um die Wiedergabe der in dem Dokument gespeicherten Daten zu initiieren. Daraufhin wird die Durchführung eines kryptografischen Protokolls gestartet (Schritt 202). Dieses kryptografische Protokoll involviert das Lesegerät und das Dokument und dient zumindest zur Überprüfung der Berechtigung des Lesegeräts für die Initiierung der Wiedergabe der Daten auf der Anzeige des Dokuments. Diese Berechtigungsprüfung kann mit Hilfe eines Challenge-Response-Protokolls erfolgen.

In dem Schritt 204 greift der Prozessor des Dokuments schließlich intern auf die in dem geschützten Speicherbereich gespeicherten Daten zu, um mit Hilfe der Daten eine Treiberschaltung so anzusteuern, dass eine Bildwiedergabe resultiert.

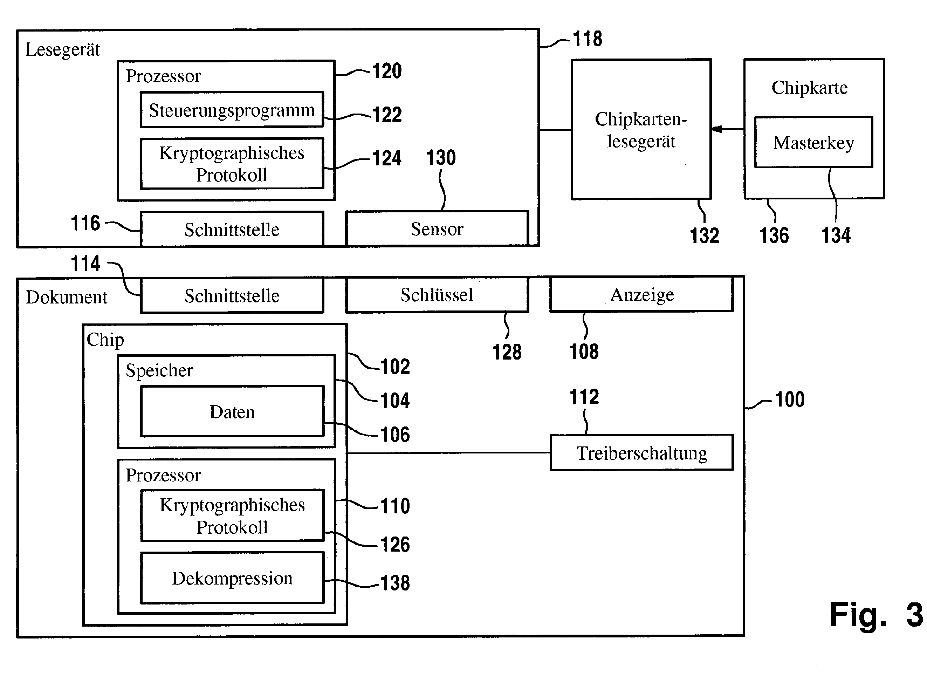

Die Fig. 3 zeigt eine Ausführungsform eines erfindungsgemäßen Dokuments 100 mit einem Aufdruck 128. Der Aufdruck 128 kann beispielsweise eine alphanumerische Angabe eines kryptografischen Schlüssels beinhalten. Alternativ ist aus dem Aufdruck 128 ein solcher kryptografischer Schlüssel durch das Lesegerät 118 ableitbar. Beispielsweise handelt es sich bei dem Aufdruck 128 um die Machine-Readable-Zone (MRZ) eines elektronischen Reisepasses oder Personalausweises.

Ergänzend zur der Ausführungsform der Fig. 1 hat das Lesegerät 118 einen optischen Sensor 130 zur Erfassung des Aufdrucks 128. Um aus den optisch von dem Aufdruck 128 erfassten Daten einen kryptografischen Schlüssel zu generieren, kann es erforderlich sein, dass das Lesegerät 118 über ein an das Lesegerät 118 angeschlossenes Chipkartenlesegerät 132 auf einen so genannten Master-Key 134 einer Chipkarte 136 zugreift.

Das Lesegerät 118 übergibt also die von dem Aufdruck 128 erfassten Daten an die Chipkarte 136, die mit Hilfe von deren Master-Key 134 den kryptografischen Schlüssel generiert und an das Lesegerät 118 übergibt. Eine Kopie dieses kryptografischen Schlüssels ist in dem Speicher 104 des Dokuments 100 oder in dessen Programminstruktionen 126 gespeichert.

Bei diesem kryptografischen Schlüssel kann es sich um einen symmetrischen Schlüssel handeln, der von dem Dokument 100 zur Durchführung eines Challenge-Response-Verfahrens zur Überprüfung der Berechtigung des Lesegeräts 118 eingesetzt wird.

Die Daten 106 können ganz oder teilweise in einer komprimierten und / oder verschlüsselten Form in dem Speicher 104 gespeichert sein. Zur Komprimierung der Daten 106 können an sich bekannte, standardisierte Verfahren zur Bilddatenkompression verwendet werden, insbesondere zur Speicherung im Format JPEG oder JPEG2000. Zur Komprimierung der Daten können auch nichtstandardisierte, geheime Verfahren zur Bilddatenkompression verwendet werden, so dass eine Dekomprimierung nur bei Kenntnis dieses geheimen Verfahrens erfolgen kann, wodurch eine weitere Sicherheit gegen einen unbefugten Zugriff auf die Daten 106 gegeben ist.

Der Prozessor 110 dient zur Ausführung von Programminstruktionen 138 zur Dekompression der Daten 106. Nachdem die Programminstruktionen 126 also nach erfolgreicher Durchführung des kryptografischen Protokolls das interne Freigabesignal abgegeben haben, wird daraufhin die Durchführung der Programminstruktionen 138 gestartet, um die aus dem Speicher 104 von dem Prozessor 110 ausgelesenen Daten 106 zu dekomprimieren. Mit Hilfe der dekomprimierten Daten wird dann die Treiberschaltung 112 von dem Prozessor 110 angesteuert.

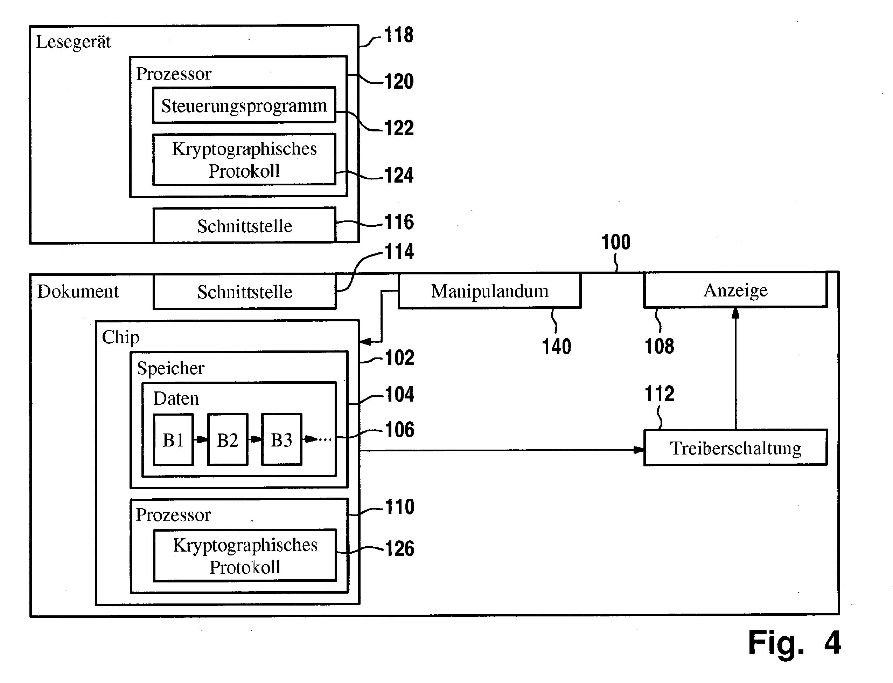

Die Fig. 4 zeigt eine Ausführungsform des Dokuments 100 mit einem Manipulandum 140. Bei dem Manipulandum 140 kann es sich um ein Betätigungselement, wie z. B. ein oder mehrere Druckknöpfe handeln. Die Betätigung des Manipulandums 140 durch einen Benutzer ist eine zusätzliche Voraussetzung dafür, dass eine Wiedergabe der Daten 106 auf der Anzeige 108 erfolgt.

Wenn ein Benutzer das Manipulandum 140 betätigt, so empfängt der Chip 102 ein entsprechendes Signal, welches eine Voraussetzung dafür ist, dass der Prozessor 110 auf die Daten 106 zugreift, diese erforderlichenfalls dekomprimiert und mit Hilfe der Daten die Treiberschaltung 112 ansteuert. Durch Betätigung des Manipulandums 140 gibt der Träger des Dokuments 100 also ausdrücklich seine Zustimmung zur Wiedergabe der Daten 106 auf der Anzeige 108.

Die Daten 106 können in der hier betrachteten Ausführungsform eine Bildsequenz bestehend aus den Bilddaten B1, B2, B3, ..., beinhalten. Unter "Bilddaten" wird hier jede Art von Daten verstanden, die sich zur bildlichen Wiedergabe auf der Anzeige 108 eignet. Beispielsweise beinhaltet die Sequenz der Bilddaten B1, B2, B3, ..., digitale Gesichtsbilder, die aus verschiedenen Ansichten aufgenommen worden sind. Alternativ oder zusätzlich kann die Sequenz der Bilddaten auch Bilder mit textuellen Angaben oder dergleichen beinhalten.

Das Manipulandum 140 kann so ausgebildet sein, dass bei einer ersten Betätigung des Manipulandums 140 das erste Element der Sequenz auf der Anzeige 108 wiedergegeben wird, das heißt die Bilddaten B1. Mit jeder weiteren Betätigung des Manipulandums 140 wird zum jeweils folgenden Element der Sequenz übergegangen, so dass nacheinander die weiteren Bilddaten der Sequenz auf der Anzeige 108 wiedergegeben werden.

Das Manipulandum 140 kann auch so ausgebildet sein, dass eine Navigation entlang der Sequenz in Vorwärts- oder Rückwärtsrichtung möglich ist. Hierzu hat das Manipulandum 140 beispielsweise einen separaten "Vor"- und einen "Zurück"-Druckknopf. Bei Betätigung des "Vor"-Druckknopfes wird zum jeweils nachfolgenden Element der Bildsequenz ausgehend von dem aktuell auf der Anzeige 108 wiedergegebenen Bild übergegangen, wohingegen durch Betätigung des "Zurück"-Bedienknopfs auf die in der Sequenz vorhergehenden Bilddaten übergegangen wird.

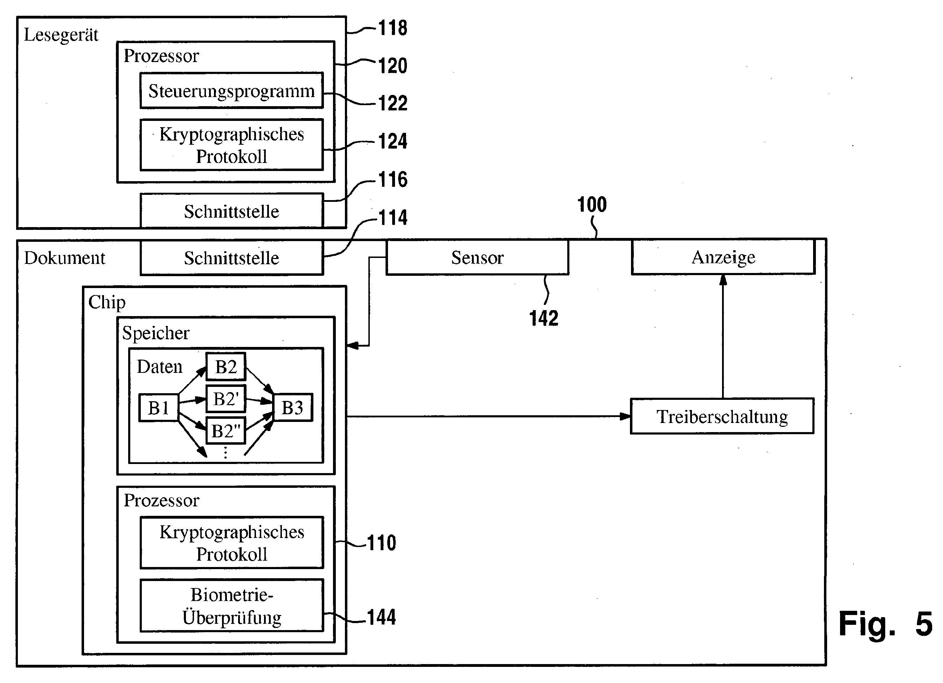

Die Fig. 5 zeigt eine Ausführungsform des Dokuments 100 mit einem Sensor 142 zur Erfassung von biometrischen Daten, wie z. B. von Fingerabdruckdaten. In dieser Ausführungsform dient der Prozessor 110 zur Ausführung von Programminstruktionen 144 zur Überprüfung eines von dem Sensor 142 erfassten biometrischen Merkmals. Ein von dem Sensor 142 erfasstes biometrisches Merkmal wird durch Ausführung der Programminstruktionen 144 mit einem biometrischen Referenzmerkmal verglichen. Die entsprechenden biometrischen Referenzdaten können in dem Speicher 104 des Chips 102 gespeichert sein. Eine hinreichende Übereinstimmung der von dem Sensor 142 erfassten biometrischen Daten mit den biometrischen Referenzdaten ist eine zusätzliche Voraussetzung dafür, dass die Daten 106 auf der Anzeige 108 wiedergegeben werden.

In der hier betrachteten Ausführungsform beinhalten die Bilddaten B2 der Sequenz (vgl. Ausführungsform der Fig. 4) verschiedensprachige Versionen B2, B2', B2", ..., wobei B2' eine Übersetzung von B2 in eine erste Sprache und B2" eine Übersetzung von B2 in eine zweite Sprache, usw. beinhaltet.

Das Lesegerät 118 ist in der Ausführungsform der Fig. 5 so ausgebildet, dass die Leseanforderung eine Spezifizierung des oder der wiederzugebenden Bilddaten der Sequenz beinhalten kann. Insbesondere kann die Leseanforderung die gewünschte Sprachversion der Bilddaten angeben, die auf der Anzeige 108 wiederzugeben ist.

Wenn beispielsweise das Lesegerät 118 zur Grenzkontrolle in ein Land eingesetzt wird, in dem die erste Sprache Amtssprache ist, so beinhaltet die Leseanforderung, die das Lesegerät 118 an das Dokument 100 sendet, eine Spezifizierung dieser ersten Sprache. Dementsprechend greift der Prozessor 110 dann auf die Version der ersten Sprache der Bilddaten, das heißt also der Bilddaten B2', zu, wenn diese auf der Anzeige 108 wiedergegeben werden sollen. Dies ist besonders vorteilhaft, da sich der Durchsatz bei der Zollgrenzkontrolle erhöhen lässt, denn es erscheint auf der Anzeige 108 immer nur die Sprachversion, die für den jeweiligen Grenzbeamten verständlich ist.

### Bezugszeichenliste

- 100: Dokument
- 102: Chip
- 104: elektronischer Speicher
- 106: Daten
- 108: Anzeige
- 110: Prozessor
- 112: Treiberschaltung
- 114: Schnittstelle
- 116: Schnittstelle
- 118: Lesegerät
- 120: Prozessor
- 122: Programminstruktionen
- 124: Programminstruktionen
- 126: Programminstruktionen
- 128: Aufdruck
- 130: Sensor
- 132: Chipkartenlesegerät
- 134: Master-Key
- 136: Chipkarte
- 138: Programminstruktionen
- 140: Manipulandum
- 142: Sensor
- 144: Programminstruktionen

## Patentansprüche

1. Dokument mit
- einem elektronischen Speicher (104) zur Speicherung von Daten (106),
- einer Schnittstelle (114) zur Kommunikation mit einer entsprechenden Schnittstelle (116) eines Lesegerätes (118) zum Empfang einer Leseanforderung,
- Mitteln (110, 126) zur Ausführung eines kryptografischen Protokolls zwischen dem Dokument (100) und dem Lesegerät (118) zur Überprüfung einer Berechtigung des Lesegeräts (118) für die Leseanforderung,
- einem maschinenlesbaren Aufdruck (128), dessen Erfassung durch das Lesegerät (118) eine Voraussetzung für die erfolgreiche Durchführung des kryptografischen Protokolls ist,
- einer Anzeigevorrichtung (108) zur Wiedergabe der Daten,
- Mitteln (102, 110, 112) zur Ansteuerung der Anzeigevorrichtung (108), die so ausgebildet sind, dass eine Ansteuerung der Anzeigevorrichtung (108) für die Wiedergabe der Daten nur erfolgt, wenn das kryptografische Protokoll erfolgreich ausgeführt worden ist,
- wobei die Daten in dem elektronischen Speicher (104) in einer komprimierten Form gespeichert sind, und mit Mitteln (138) zur Dekompression der Daten zur Wiedergabe der Daten auf der Anzeigevorrichtung (108), wobei eine Dekompression nur erfolgt, wenn das kryptografische Protokoll erfolgreich ausgeführt worden ist, wobei die mit der Leseanforderung angeforderten Daten auf der Anzeigevorrichtung wiedergegeben werden, die Daten selbst aber nicht über die Schnittstelle des Dokuments ausgegeben werden, wobei es sich bei dem Dokument um einen Reisepass, Personalausweis, ein Visum oder einen Führerschein handelt.

2. Dokument nach Anspruch 1, wobei die Daten eine Bildsequenz beinhalten, wobei die Bildsequenz zumindest ein erstes Bild und ein zweites Bild eines Inhabers des Dokuments beinhaltet, und wobei das erste Bild und das zweite Bild den Inhaber in unterschiedlichen ersten und zweiten Ansichten zeigen.

3. Dokument nach einem der vorhergehenden Ansprüche, wobei die Daten textuelle Angaben beinhalten.

4. Dokument nach einem der vorhergehenden Ansprüche, wobei die Leseanforderung eine Spezifizierung der wiederzugebenden Daten beinhaltet.

5. Dokument nach Anspruch 4, wobei die Spezifizierung eine Sprache beinhaltet, wobei verschiedene Sprachversionen textueller Angaben in den Daten beinhaltet sind, und wobei die Mittel zur Ansteuerung der Anzeigevorrichtung (108) so ausgebildet sind, dass die der in der Leseanforderung spezifizierten Sprache entsprechende Sprachversion der textuellen Angaben für die Wiedergabe auf der Anzeigevorrichtung (108) ausgewählt wird.

6. Dokument nach einem der vorhergehenden Ansprüche mit einem Manipulandum (140) zur Betätigung durch einen Nutzer, wobei die Betätigung des Manipulandums (140) eine weitere Voraussetzung für die Wiedergabe der Daten auf der Anzeigevorrichtung (108) ist.

7. Dokument nach Anspruch 6, wobei die Daten eine Bildsequenz beinhalten und wobei das Manipulandum (140) zur Navigation entlang der Bildsequenz ausgebildet ist.

8. Dokument nach einem der vorhergehenden Ansprüche, mit einem Sensor (142) zur Erfassung eines biometrischen Merkmals eines Benutzers und mit Mitteln zur Überprüfung des biometrischen Merkmals auf Übereinstimmung mit einem in dem Dokument gespeicherten biometrischen Referenzmerkmal, wobei die Übereinstimmung eines von dem Sensor erfassten biometrischen Merkmal mit dem biometrischen Referenzmerkmal eine weitere Voraussetzung für die Wiedergabe der Daten auf der Anzeigevorrichtung (108) ist.

9. Dokument nach einem der vorhergehenden Ansprüche, wobei die Schnittstelle (114) für eine kontaktbehaftete und/oder eine kontaktlose Kommunikation mit dem Lesegerät (118) ausgebildet ist.

## Claims

1. A document comprising
- an electronic memory (104) for storing data (106),
- an interface (114) for communication with a corresponding interface (116) of a reader (118) for receiving a request,
- means (110, 126) for executing a cryptographic protocol between the document (100) and the reader (118) for checking an authorisation of the reader (118) for the read request,
- a machine-readable imprint (128), of which the detection by the reader (118) is a precondition for the successful execution of the cryptographic protocol,
- a display device (108) for reproducing the data,
- means (102, 110, 112) for activating the display device (108), which are designed such that the display device (108) is only activated for reproduction of the data if the cryptographic protocol has been successfully executed,
- wherein the data in the electronic memory (104) are stored in a compressed form, and comprising means (138) for decompressing the data so as to reproduce the data on the display device (108), wherein decompression only occurs if the cryptographic protocol has been successfully executed, wherein the data requested with the request is reproduced on the display device, however the data itself is not output via the interface of the document, wherein the document is a passport, personal identification document, a visa, or a driver's licence.

2. The document according to Claim 1, wherein the data includes an image sequence, wherein the image sequence includes at least one first image and second image of a holder of the document, and wherein the first image and the second image show the holder in different first and second views.

3. The document according to one of the preceding claims, wherein the data includes textual details.

4. The document according to one of the preceding claims, wherein the request includes a specification of the data to be reproduced.

5. The document according to Claim 4, wherein the specification includes a language, wherein different language versions of textual details are included in the data, and wherein the means for activating the display device (108) are designed such that the language version of the textual details corresponding to the language specified in the read request is selected for the reproduction on the display device (108).

6. The document according to one of the preceding claims, comprising a manipulandum (140) for actuation by a user, wherein the actuation of the manipulandum (140) is a further precondition for the reproduction of the data on the display device (108).

7. The document according to Claim 6, wherein the data includes an image sequence, and wherein the manipulandum (140) is designed for navigation along the image sequence.

8. The document according to one of the preceding claims, comprising a sensor (142) for capturing a biometric feature of a user, and comprising means for checking a match between the biometric feature and a biometric reference feature stored in the document, wherein the match between a biometric feature captured by the sensor and the biometric reference feature is a further precondition for the reproduction of the data on the display device (108).

9. The document according to one of the preceding claims, wherein the interface (114) is designed for contact-based and/or contactless communication with the reader (118).

## Revendications

1. Document avec
- une mémoire électronique (104) pour le stockage de données (106),
- une interface (114) pour la communication avec une interface (116) correspondante d'un dispositif de lecture (118) pour la réception d'une demande de lecture,
- des moyens (110, 126) pour l'exécution d'un protocole cryptographique entre le document (100) et le dispositif de lecture (118) pour la vérification d'une autorisation du dispositif de lecture (118) pour la demande de lecture,
- une surimpression lisible par machine (128), dont l'acquisition par le dispositif de lecture (118) constitue une condition préalable pour la réussite de l'exécution du protocole cryptographique,
- un dispositif d'affîchage (108) pour la reproduction des données,
- moyens (102, 110, 112) pour l'actionnement du dispositif d'affichage (108), conçus de manière à ce qu'un actionnement du dispositif d'affichage pour la reproduction de données ne soit effectué que si le protocole cryptographique est exécuté avec succès,
- dans lequel les données dans la mémoire électronique (104) sont stockées sous une forme comprimée, et avec des moyens (138) pour la décompression des données, en vue de la reproduction des données sur le dispositif d'affichage (108), dans lequel la décompression n'est effectuée que si le protocole cryptographique est exécuté avec succès, dans lequel les données requises avec la demande de lecture sont reproduites sur le dispositif d'affichage, mais sans que les données elles-mêmes ne soient éditées par l'interface du document, dans lequel le document est un passeport, une carte d'identité, un visa ou un permis de conduire.

2. Document selon la revendication 1, dans lequel les données contiennent une séquence d'images, dans lequel la séquence d'images contient au moins une première image et une deuxième image d'un titulaire du document, et dans lequel la première image et la deuxième image représentent le titulaire sous une première vue et une deuxième vue différentes.

3. Document selon l'une des revendications précédentes, dans lequel les données contiennent des indications textuelles.

4. Document selon l'une des revendications précédentes, dans lequel la demande de lecture contient une spécification des données à reproduire.

5. Document selon la revendication 4, dans lequel la spécification contient une langue, dans lequel différentes versions linguistiques d'indications textuelles sont contenues dans les données, et dans lequel les moyens pour l'actionnement du dispositif d'affichage (108) sont conçus de manière à ce que la version linguistique des indications textuelles qui correspond à la langue spécifiée dans la demande de lecture soit sélectionnée pour la reproduction sur le dispositif d'affichage (108).

6. Document selon l'une des revendications précédentes, avec un manipulandum (140) pour l'actionnement par un utilisateur, dans lequel l'actionnement du manipulandum (140) constitue une autre condition préalable pour la reproduction des données sur le dispositif d'affichage (108).

7. Document selon la revendication 6, dans lequel les données contiennent une séquence d'images et dans lequel le manipulandum (140) est conçu pour la navigation le long de la séquence d'images.

8. Document selon l'une des revendications précédentes, avec un capteur (142) pour la détection d'une caractéristique biométrique d'un utilisateur, et avec des moyens pour la vérification de la caractéristique biométrique quant à la concordance avec une caractéristique biométrique de référence stockée dans le document, dans lequel la concordance d'une caractéristique biométrique détectée par le capteur avec la caractéristique biométrique de référence constitue une autre condition préalable pour la reproduction des données sur le dispositif d'affichage (108).

9. Document selon l'une des revendications précédentes, dans lequel l'interface (114) est conçue pour une communication avec contact et/ou sans contact avec le dispositif de lecture (118).
